## Europäisches Patentamt
## European Patent Office
## Office européen des brevets

Veröffentlichungsnummer: **0 316 588**
**A1**

## EUROPÄISCHE PATENTANMELDUNG

Anmeldenummer: 88117211.8

Int. Cl.⁴ **F16L 55/10**

Anmeldetag: **15.10.88**

Priorität: **17.11.87 DE 8715225 U**

Veröffentlichungstag der Anmeldung:
**24.05.89 Patentblatt 89/21**

Benannte Vertragsstaaten:
**AT BE CH DE ES FR GB GR IT LI LU NL SE**

Anmelder: **Bantin, Horst**
**Im Tal 10 (Reethorn)**
**D-2875 Ganderkesee 2(DE)**

Anmelder: **Bantin, Thorsten**
**Im Tal 10 (Reethorn)**
**D-2875 Ganderkesee 2(DE)**

Erfinder: **Bantin, Horst**
**Im Tal 10 (Reethorn)**
**D-2875 Ganderkesee 2(DE)**
Erfinder: **Bantin, Thorsten**
**Im Tal 10 (Reethorn)**
**D-2875 Ganderkesee 2(DE)**

Vertreter: **Jabbusch, Wolfgang, Dr.**
**Elisabethstrasse 6**
**D-2900 Oldenburg(DE)**

Vorrichtung zur äusseren Beaufschlagung einer einfrierbare Medien führenden Rohrleitung mit Kältemittel.

Eine Vorrichtung zur äußeren Beaufschlagung einer einfrierbare Medien führenden Rohrleitung vor und hinter einem zu reparierenden Rohrleitungsabschnitt mit Kältemittel ist als Zange ausgebildet, deren Backen (1, 2) ein an ein Rohr setzbares Zangenmaul (3) bilden. Jede Backe (1, 2) ist als geschlossener Hohlkörper ausgebildet, der mit jeweils einem Eintritt (4, 4') und Austritt (5, 5') für das Kältemittel versehen ist. Das Kältemittel kann somit in vorteilhafter Weise in einem geschlossenen Kreislauf zirkulieren.

_Fig.1_

## Vorrichtung zur äußeren Beaufschlagung einer einfrierbare Medien führenden Rohrleitung mit Kältemittel

Die Erfindung betrifft eine Vorrichtung zur äußeren Beaufschlagung einer einfrierbare Medien führenden Rohrleitung vor und hinter einem zu reparierenden Rohrleitungsabschnitt mit Kältemittel.

Bei der Durchführung von Reparaturarbeiten an Rohrleitungen von z.B. Heizungsanlagen oder dergleichen gefrierfähige Medien führenden Rohrleitungen, wird häufig das Vereisungsverfahren eingesetzt, um vor und hinter dem zu reparierenden Rohrabschnitt einen Eispfropfen im Rohr zu bilden, wodurch ein Entleeren der Rohrleitungsanlage für die Zeit der Durchführung von Reparaturarbeiten nicht mehr erforderlich ist. Dazu werden vor und hinter dem zu reparierenden Rohrabschnitt das Rohr umgebende Manschetten angesetzt, in die Kältemittel eingeleitet wird, das in den Manschetten verdampft und die dafür notwendige Verdampfungswärme der Umgebung, und zwar insbesondere dem entsprechenden Rohrabschnitt, entzieht, wodurch sich der gewünschte Eispfropfen im Rohr als Verschluß bildet. Als Kältemittel werden gewöhnlich halogenierte oder flourierte Kohlenwasserstoffe verwendet, die aus einem Vorratsbehälter den um die Rohrleitungsabschnitte gelegten Manschetten zuströmen, dort verdampfen und in Form von Gasen wieder aus den Manschetten austreten.

Die Anwendung des Gefrierverfahrens für die Reparatur von Rohrleitungen ist aufgrund der eingesetzten Kältemittel problematisch. Verdampftes Kältemittel ist schwerer als Luft und durch Ausströmen größerer Mengen wird Atemluft verdrängt. Für Personen, die Reparaturarbeiten in geschlossenen Räumen, beispielsweise engen Kellerräumen, durchführen, entsteht dadurch Erstickungsgefahr. Außerdem haben die als Kältemittel verwendeten Kohlenwasserstoffe den Nachteil, daß bei einer thermischen Zersetzung hochtoxische Verbindungen entstehen, die zu schwerwiegenden gesundheitlichen Schäden führen. Da bei Reparaturarbeiten an hier in Rede stehenden Rohrleitungen häufig geschweißt oder gelötet wird, ist die Gefahr der thermischen Zersetzung freigesetzter Kältemitteldämpfe in Schweiß- bzw. Lötflammen sehr hoch. Aus diesem Grunde ist Schweißen und Löten sowie jeglicher Umgang mit Feuer und offenem Licht beim Umgang mit derartigen Kältemitteln durch die einschlägigen Bestimmungen untersagt. Damit wird aber das Einfrierverfahren zur Erleichterung von Reparaturarbeiten häufig uninteressant oder zwingt zur Anwendung anderer Kältemittel, beispielsweise Trockeneis ($CO_2$). Auch $CO_2$ ist nicht ganz unproblematisch, vor allen Dingen dann, wenn Reparaturarbeiten an Rohrleitungen in schlecht belüftbaren Räumen durchgeführt werden.

Der Erfindung liegt die Aufgabe zugrunde, eine Vorrichtung zur äußeren Beaufschlagung einer Rohrleitung vor und hinter einem zur reparierenden Rohrabschnitt mit Kältemittel dahingehend zu verbessern, daß ein Freisetzen von Kältemitteldämpfen in die Umgebung während des Einfrierens und während der Reparaturarbeiten nicht mehr auftritt.

Diese Aufgabe ist dadurch gelöst, daß die Vorrichtung als Zange ausgebildet ist, deren Backen ein an ein Rohr setzbares Zangenmaul bilden, und daß jede Backe als Hohlkörper ausgebildet ist, der mit jeweils einem Eintritt und einem Austritt für das Kältemittel versehen ist.

Eine Zange oder Klemme läßt sich problemlos an Rohre ansetzen, wobei flächiger Kontakt der das Zangenmaul bildenden Backen mit dem einzufrierenden Rohr gegeben ist. Da jede Backe als Hohlkörper ausgebildet ist und mit einem Eintritt und mit einem Austritt für das Kältemittel versehen ist, erfolgt Zuströmung und Abströmung des Kältemittels in einem geschlossenen Kreislauf, so daß ein Freisetzen des verdampften Kältemittels nicht mehr auftritt. Durch entsprechende Wartung und Pflege der Vorrichtung, sowie der Zu- und Ableitungen für Kältemittel, können auch Leckagen vermieden werden, so daß in keiner Weise Kältemittel freigesetzt wird. Bei Verwendung der erfindungsgemäßen Vorrichtung kann somit auch für Reparaturzwecke an den eingefrorenen Rohrleitungen geschweißt oder gelötet werden, ohne die Gefahr von gesundheitlichen Schäden durch thermische Zersetzung der verwendeten Kältemitteldämpfe.

Das Kältemittel kann beispielsweise aus einem Vorratsbehälter über eine Zuführungsleitung entnommen werden, die an den Eintritt der jeweiligen Backe der Zange oder Klemme angeschlossen ist, und durchströmt die Backe, wobei es im Hohlraum der Backe verdampft und die nötige Verdampfungswärme der Umgebung entzieht. Durch Wärmeleitung durch die Wandung der Backe wird diese Wärme auch der Rohrleitung entzogen, an der die das Zangenmaul bildenden Backen anliegen. Das verdampfte oder zumindest zum Teil verdampfte Kältemittel strömt dann aus der Backe über den Austritt für das Kältemittel ab und kann, ebenfalls über eine entsprechende Leitung einer an sich bekannten Einrichtung zur erneuten Verflüssigung des Kältemittels zugeführt werden, die z.B. aus einem kleinen Kompressor mit entsprechendem Verflüssiger bestehen kann. Der Kompressor kann beispielsweise elektrisch betrieben werden.

Die erfindungsgemäße Vorrichtung ermöglicht somit auch eine ständige Wiederverwendung des eingesetzten Kältemittels. Im Gegensatz dazu, geht bei dem Einfrierverfahren mit an sich bekannten Manschetten das in den Manschetten verdampfte Kältemittel verloren, weil es in die freie Umgebung abgeleitet wird.

Vorzugsweise sind die Backen der Vorrichtung über ein Verbin dungsgelenk miteinander verbunden, so daß sie sich, entsprechend einer üblichen Zange oder Klemme, auseinanderbewegen lassen oder zwecks Anpressung an ein Rohr auch zusammengeführt werden, wobei sie sich um das Verbindungsgelenk bewegen. Die Backen können in bestimmten Klemmstellungen, z.B. mittels Feststellorganen, arretiert werden. Es ist auch möglich, Klemmandruck durch Federbelastung zu erzeugen. Zur Vereinfachung der Handhabung ist vorgesehen, daß jede Backe in einem über das Gelenk hinausragenden Handgriff ausläuft.

Damit sich das Zangenmaul an eine äußere Rohrwandung mit größtmöglicher Kontaktfläche anlegen kann, sind als Zangenmaul in jede Backe eingeformte Mulden vorgesehen. Zwecks Anpassung an unterschiedliche Durchmesser der Rohre kann in jede Mulde eine Halbschale lösbar eingesetzt sein. Die Halbschalen weisen einen äußeren Radius auf, der den Mulden des Zangenmaules angepaßt ist. Der innere Radius jeder Mulde kann dem Durchmesser des entsprechenden Rohres angepaßt sein. Durch Auswechseln der entsprechenden Halbschalen ist die Vorrichtung an die Durchmesser zu reparierender Rohrleitungen leicht anpaßbar.

Weiterhin zeichnet sich die Vorrichtung dadurch aus, daß jeder Eintritt und jeder Austritt für das Kältemittel mit einem Anschlußstutzen versehen ist. Die Anschlußstutzen ermöglichen die Verbindung mit entsprechenden Zuführungsleitungen, beispielsweise Schläuchen, für das Kältemittel, wobei die Anschlußstutzen mit entsprechenden Verschraubungen, Kupplungen oder dergleichen an sich bekannten Verbindungsorganen ausgerüstet sein können, um leckdichte Anschlüsse der Kältemittelzuführungen und Ableitungen zu gewährleisten.

Die zangenartig bzw. klemmenartig ausgebildete Vorrichtung entzieht der einzuführenden Rohrleitung Wärme, die über das in den Backen verdampfende Kältemittel abgeleitet wird. Die Vorrichtung wird deshalb aus einem Werkstoff gefertigt, der sich durch einen hohen Wärmeleitungskoeffizienten auszeichnet. Als Werkstoff kommt insbesondere Kupferblech in Frage. Aus Kupferblech kann z.B. ein Zuschnitt gefertigt werden, aus welchem sich ein Zangenhebel, bestehend aus Handgriff und Backe, ausformen läßt. Jeder Handgriff kann dabei eine Ummantelung aus isolierendem Werkstoff erhalten. Beispielsweise ist eine Beschichtung mit Kunststoff möglich. Es ist jedoch auch möglich, lediglich eine Backe aus Kupfer oder dergleichen gut wärmeleitendem Material zu fertigen und einen Handgriff aus schlecht wärmeleitendem Material, beispielsweise Kunststoff oder Holz, damit zu verbinden.

Ein Ausführungsbeispiel der Erfindung, aus dem sich weitere erfinderische Merkmale ergeben, ist in der Zeichnung dargestellt. Es zeigen:

Fig. 1 eine schematische Seitenansicht der Vorrichtung und

Fig. 2 die Rückansicht der Vorrichtung gemäß Fig. 1 von links gesehen.

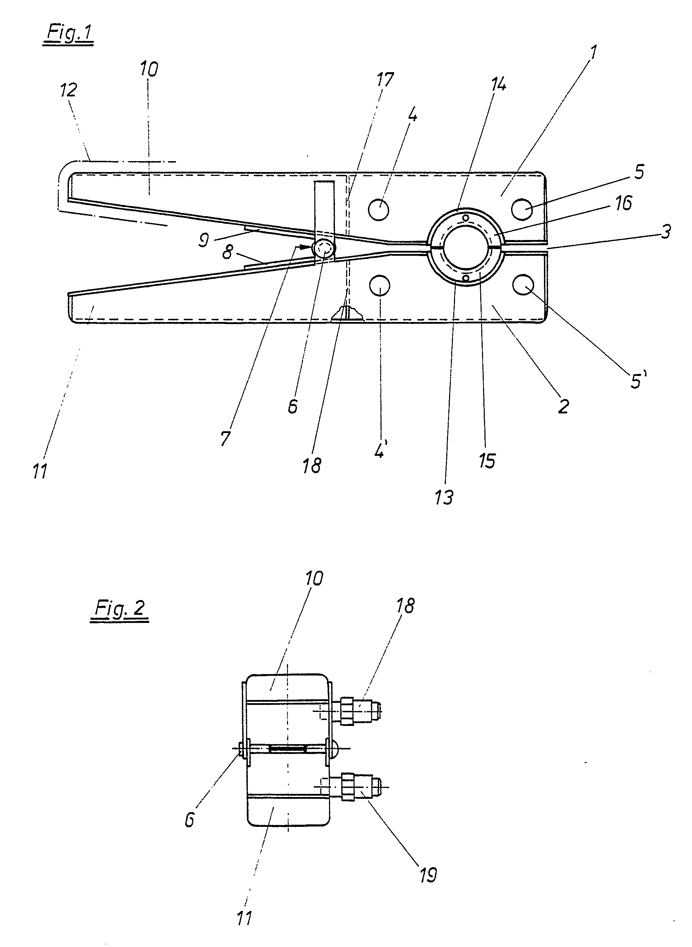

Fig. 1 zeigt die Vorrichtung zur äußeren Beaufschlagung einer einfrierbare Medien führenden Rohrleitung vor und hinter einem zu reparierenden Rohrleitungsabschnitt mit Kältemittel in einer Seitenansicht. Die Vorrichtung ist als Zange oder Klemme ausgebildet, deren Backen 1 und 2 ein an ein Rohr setzbares Zangenmaul 3 bilden. Jede Backe 1, 2 ist als Hohlkörper ausgebildet, der mit jeweils einem Eintritt 4 bzw. 4' und Austritt 5 bzw. 5' für das Kältemittel versehen ist. Die Backen 1 und 2 haben ein Verbindungsgelenk 6 gemeinsam, das mit einer Klemmandruck erzeugenden Feder 7 ausgerüstet ist, deren Federarme 8 und 9 hier sichtbar sind. Jede Backe 1, 2 läuft in einem über das Gelenk hinausragenden Handgriff 10, 11 aus. Mit 12 ist eine Ummantelung aus isolierendem Werkstoff bezeichnet, die hier andeutungsweise gezeichnet ist und beide Handgriffe 10, 11 umgibt.

Das Zangenmaul 3 ist mit in jede Backe 1, 2 eingeformten Mul den 13 und 14 ausgerüstet. In jede Mulde ist eine Halbschale 15 bzw. 16 lösbar eingesetzt. Die Halbschalen können ausgewechselt werden, um Anpassungen an unterschiedliche Rohrdurchmesser einer zu reparierenden Rohrleitung zu ermöglichen.

Mit 17 und 18 sind Schottwände bezeichnet, die in die Hohlkörper der Backen eingesetzt sind, um vom Kältemittel durchströmte Hohlräume innerhalb der Backen gegenüber den Handgriffen 10 und 11 abzuschotten.

Fig. 2 zeigt eine Ansicht der Vorrichtung nach Fig. 1 von links gesehen. Gleiche Bauteile sind mit gleichen Bezugszahlen bezeichnet. Fig. 2 läßt insbesondere erkennen, daß KältemittelEintritte 4, 4' und -Austritte 5, 5' mit Anschlußstutzen 18 und 19 ausgerüstet sind.

## Ansprüche

1. Vorrichtung zur äußeren Beaufschlagung einer einfrierbare Medien führenden Rohrleitung vor und hinter einem zu reparierenden Rohrleitungsabschnitt mit Kältemittel,
dadurch gekennzeichnet,

daß sie als Zange ausgebildet ist, deren Backen (1. 2) ein an ein Rohr setzbares Zangenmaul (3) bilden und

daß jede Backe (1, 2) als Hohlkörper ausgebildet ist, der mit jeweils einem Eintritt (4, 4') und Austritt (5, 5') für das Kältemittel versehen ist.

2. Vorrichtung nach Anspruch 1, dadurch gekennzeichnet, daß die Backen (1, 2) ein Verbindungsgelenk (6) gemeinsam haben.

3. Vorrichtung nach Anspruch 2, dadurch gekennzeichnet, daß jede Backe (1, 2) in einem über das Gelenk (6) hinausragenden Handgriff (10, 11) ausläuft.

4. Vorrichtung nach Anspruch 1, dadurch gekennzeichnet, daß als Zangenmaul (3) in jede Backe (1, 2) eingeformte Mulden (13, 14) vorgesehen sind.

5. Vorrichtung nach Anspruch 4, dadurch gekennzeichnet, daß in jede Mulde eine Halbschale (15, 16) lösbar eingesetzt ist.

6. Vorrichtung nach einem der vorhergehenden Ansprüche, dadurch gekennzeichnet, daß jeder Eintritt (4, 4') und jeder Austritt (5, 5') für das Kältemittel mit einem Anschlußstutzen (18, 19) versehen ist.

7. Vorrichtung nach einem der vorhergehenden Ansprüche, dadurch gekennzeichnet, daß jeder aus Backe (1, 2) und Handgriff (10, 11) bestehende Zangenhebel aus Kupferblech ausgeformt ist.

8. Vorrichtung nach einem der vorhergehenden Ansprüche, dadurch gekennzeichnet, daß jeder Handgriff (10, 11) eine Ummantelung (12) aus isolierendem Werkstoff aufweist.

EP 0 316 588 A1

Fig.1

Fig.2

10406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 548 757 (SCHRÖDER) * Zusammenfassung; Figuren * | 1 | F 16 L 55/10 |
| A | | 2 | |
| | --- | | |
| Y | FR-A- 922 308 (FREEZ-SEAL EQUIPMENT) * Seite 3, Zeile 58 - Seite 4, Zeile 18; Figuren * | 1 | |
| A | | 2,4-6 | |
| | ----- | | |

|  | RECHERCHIERTE SACHGEBIETE (Int. Cl.4) |
|---|---|
|  | F 16 L |

Der vorliegende Recherchenbericht wurde für alle Patentansprüche erstellt

| Recherchenort | Abschlußdatum der Recherche | Prüfer |
|---|---|---|
| DEN HAAG | 24-01-1989 | HUBEAU M.G. |

EPO FORM 1503 03.82 (P0403)